# EUROPÄISCHE PATENTANMELDUNG

(11) **EP 0 982 218 A1**
(43) Veröffentlichungstag der Anmeldung: **01.03.2000**
(21) Anmeldenummer: 99112746.5
(22) Anmeldetag: 01.07.1999
(51) Int. Cl.: B62B 5/06

(54) **Griffanordnung für Transportroller**

(30) Priorität: 26.08.1998 DE 19838704
(71) Anmelder: WANZL METALLWARENFABRIK GMBH, D-89336 Leipheim (DE); DaimlerChrysler AG, 70567 Stuttgart (DE)
(72) Erfinder: Hannig, Martin, 89073 Ulm (DE)

(57) **Zusammenfassung**

Die Erfindung betrifft einen Transportroller (1) mit einer Abstelleinrichtung (4) für Ware, mit einem Griff (12), der am oberen Ende (9) eines zur Abstelleinrichtung (4) führenden Trägers (7) angeordnet ist, wobei der Griff (12) aus einer Gebrauchslage, in der er nach oben gerichtet ist, in eine Nichtgebrauchslage verschwenkbar ist, in welcher er nach unten weist. Es ist vorgesehen, daß der Griff (12) ein horizontales Achsstück (14) aufweist, das mit zwei parallel zur Längsachse (15) des Achsstückes (14) sich erstreckenden Vertiefungen (18) ausgestattet ist und daß am Träger (7) ein mit einem Vorsprung (21) versehenes, unter konstanter Federbelastung stehendes Rastteil (20) angeordnet ist, das von Hand längs des Trägers (7) bewegbar und zum wahlweisen Eingreifen in eine der Vertiefungen (18) des Achsstückes (14) bestimmt ist.

## Beschreibung

Die Erfindung betrifft einen Transportroller mit einer Abstelleinrichtung für Ware, mit einem Griff, der am oberen Ende eines zur Abstelleinrichtung führenden Trägers angeordnet ist, wobei der Griff aus einer Gebrauchslage, in der er nach oben gerichtet ist, in eine Nichtgebrauchslage verschwenkbar ist, in welcher er nach unten weist.

Transportroller dieser Art erweisen sich als vorteilhaft, wenn es gilt, kleinere Warenmengen oder leichtes Gepäck bequem und kräfteschonend zu transportieren. Da der Griff bei solchen Transportrollern schwenkbar angeordnet ist, kann sich die Verbindung zwischen Griff und Träger als Schwachstelle dann erweisen, wenn mit beladenen Transportrollern unachtsam umgegangen wird.

Es gilt, bei einem Transportroller der hier vorliegenden Art die Verbindung zwischen dem Griff und dem Träger so zu gestalten, daß auch bei rauhem Umgang ein sicheres Führen des Transportrollers möglich ist, ohne daß dadurch ein Lockern oder Ausschlagen der neu zu schaffenden Verbindung befürchtet werden muß.

Als Lösung dieser Aufgabe wird vorgeschlagen, am Griff ein horizontales Achsstück vorzusehen, das mit zwei parallel zur Längsachse des Achsstückes sich erstreckenden Vertiefungen ausgestattet ist und am Träger ein mit einem Vorsprung versehenes, unter konstanter Federbelastung stehendes Rastteil anzuordnen, das von Hand längs des Trägers bewegbar und zum wahlweisen Eingreifen in eine der Vertiefungen des Achsstückes bestimmt ist.

Es erweist sich als zweckmäßig, die am Achsstück befindlichen Vertiefungen sowie den am Rastteil vorgesehenen Vorsprung länglich zu gestalten und die Vertiefungen und den Vorsprung parallel zur Längsachse des Achsstückes anzuordnen, so daß die neu geschaffene Verbindung nicht nur imstande ist, die üblich auftretenden Belastungen beim Führen eines beladenen Transportwagens schadlos aufzunehmen, sondern auch die zu erwartenden Kippkräfte beherrscht, die bei allzu sorglosem Fahren auf unebenem Boden oder beim schrägen Anfahren an Bordsteinkanten auf die Verbindung einwirken können.

Die Erfindung wird anhand eines Ausführsbeispieles näher erläutert. Es zeigt
- Fig. 1: einen Transportroller mit verschwenkbarem Griff;
- Fig. 2: die Verbindung zwischen dem Griffund dem Träger sowie
- Fig. 3: die gleiche Verbindung, bei der sich jedoch das Rastteil nicht im Eingriff mit dem Achsstück befindet.

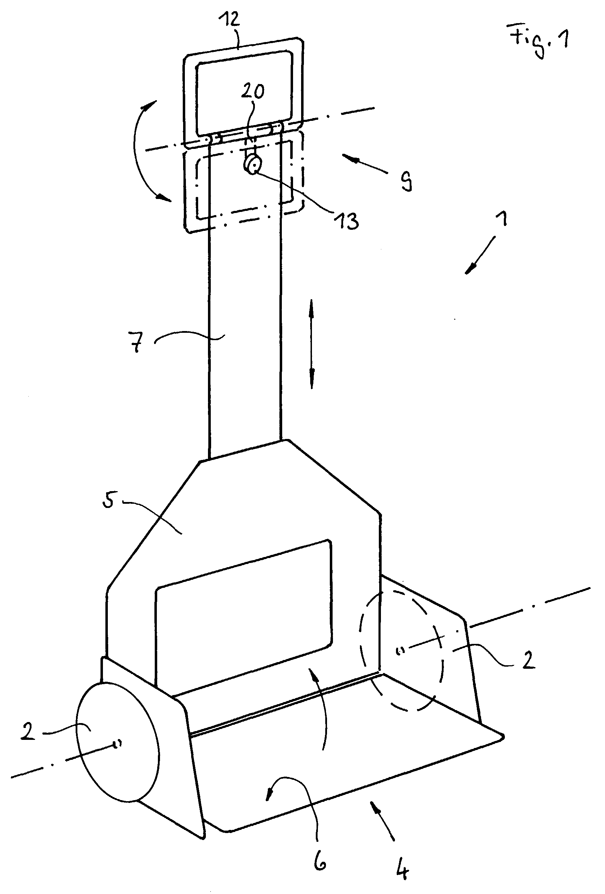

Der in Fig. 1 dargestellte Transportroller 1 weist eine von zwei Rädern 2 abgestützte Abstelleinrichtung 4 für Ware auf. Am oberen Ende 9 eines Trägers 7, der sich von der Abstelleinrichtung 4 aus nach oben erstreckt, ist ein Griff 12 zum Führen des Transportrollers 1 angeordnet. Der Griff 12 ist aus einer Gebrauchslage, in der er nach oben gerichtet ist, in eine Nichtgebrauchslage (strichpunktiert gezeichnet) verschwenkbar, in welcher er nach unten weist und bevorzugt am Träger 7 anliegt. Ein im Träger 7 befindliches Rastteil 20, das über ein Griffstück 13 von Hand bewegbar ist, sorgt dafür, daß der Griff 12 in Gebrauchslage und Nichtgebrauchslage am Träger 7 arretiert ist. Die Verschwenkbarkeit des Griffes 12 dient dazu, den Transportroller 1 platzsparend zusammenfalten zu können. Deshalb läßt sich beim Ausführungsbeispiel der Träger 7 bevorzugt in die Rückwand 5 der Abstelleinrichtung 4 einschieben. Ebenso kann die Abstellebene 6 der Abstelleinrichtung 4 an die Rückwand 5 hochgeklappt und die Räder 2 and die hochgeklappte Abstellebene 6 geschwenkt werden.

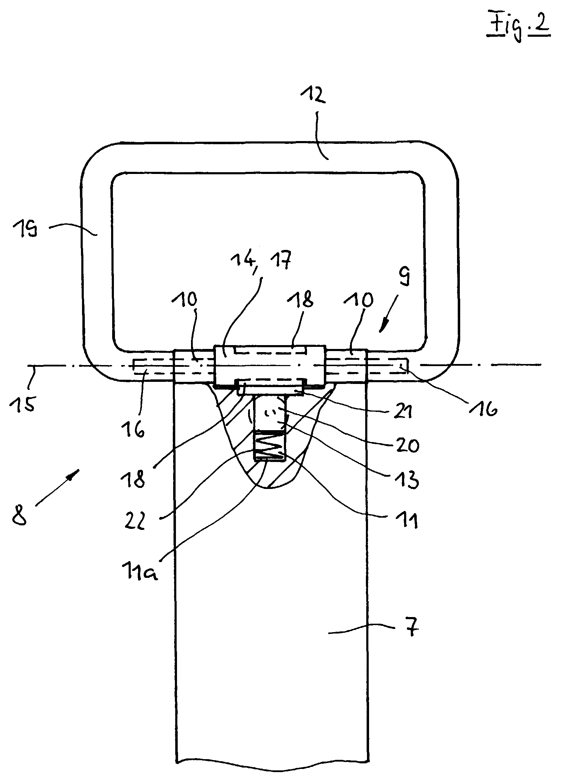

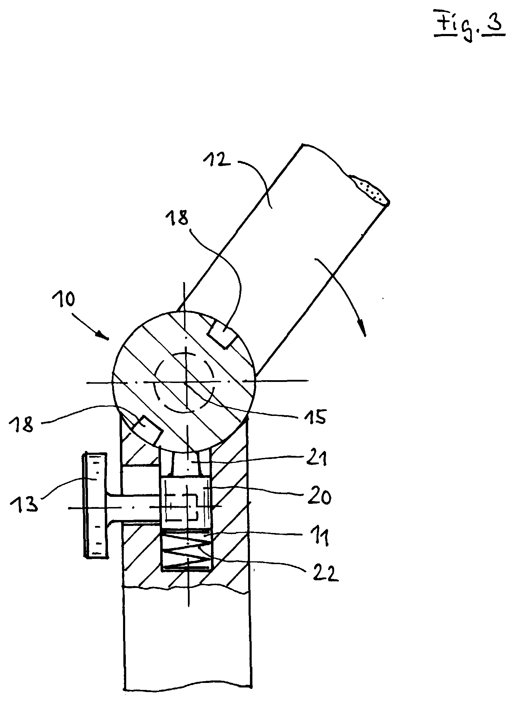

Fig. 2 zeigt den oberen Bereich 8 des Trägers 7 sowie den in Gebrauchslage befindlichen und deshalb nach oben gerichteten Griff 12. Der am Träger 7 in zwei Lagern 10 gelagerte Griff 12 weist ein horizontal angeordnetes Achsstück 14 auf, dessen Längsachse 15 parallel zur Längsachse 3 der beiden Räder 2 verläuft, vgl. auch Fig. 1. Das bevorzugt aus Stahl gefertigte Achsstück 14 ist mit seinen beiden freien Enden 16 in einem bevorzugt aus Kunststoff bestehenden Griffabschnitt 19 ortsfest eingefügt. Zwischen seinen beiden Enden weist das Achsstück 14 ein zylindrisches Mittelstück 17 auf, dessen Durchmesser größer ist als der Durchmesser oder ein vergleichbarer Querschnitt der freien Enden 16. Das Mittelstück 17 des Achsstückes 14 weist an seinem Umfang zwei gegenseitig auf Abstand gehaltene längliche Vertiefüngen 18 auf, die sich parallel zur Längsachse 15 des Achsstückes 14 erstrecken. Der Träger 7 weist mittig und von seinem oberen Ende 9 frei zugänglich einen Raum 11 auf, in welchem das Rastteil 20 einliegt. Zwischen dem unteren Ende 11a des Raumes 11 und dem Rastteil 20 ist eine Druckfeder 22 eingesetzt. Die Druckfeder 22 drückt das Rastteil 20 konstant gegen das Mittelstück 17 des Achsstückes 14. Das Rastteil 20 weist einen nach oben gerichteten länglichen Vorsprung 21 auf, der sich in Gebrauchslage oder in Nichtgebrauchslage des Griffes 12 in bevorzugt formschlüssigem Eingriff mit einer der beiden Vertiefungen 18 befindet. Auf Höhe des Rastteiles 20 führt von außen durch den Träger 7 das Griffstück 13 zum Rastteil 20. Über das Griffstück 13, siehe Fig. 3, kann das Rastteil 20 so bewegt werden, daß der Vorsprung 21 sich nicht mehr in einer der Vertiefungen 18 befindet.

Fig. 3 zeigt den oben beschriebenen Vorgang. Das Rastteil 20 ist von Hand so weit nach unten gedrückt worden, daß sich der in den Lagern 10 gelagerte Griff 12 um die Längsachse 15 verschwenken läßt. Ist der Griff 12 weit genug nach unten verschwenkt, rastet das Rastteil 20 mit seinem Vorsprung 21 in die andere Vertiefung 18 ein und arretiert den Griff 12 in seiner Nichtgebrauchslage. Zum Erreichen der Gebrauchslage muß das Rastteil 20 wieder nach unten gedrückt werden bis der Griff 12 frei drehbar ist. Schwenkt man den Griff 12 in die Gebrauchslage, rastet der Vorsprung 21, wie in Fig. 2 dargestellt, wieder in die Vertiefung 18 ein und arretiert den Griff 12 in dessen Gebrauchslage.

## Patentansprüche

1. Transportroller (1) mit einer Abstelleinrichtung (4) für Ware, mit einem Griff (12), der am oberen Ende (9) eines zur Abstelleinrichtung (4) führenden Trägers (7) angeordnet ist, wobei der Griff (12) aus einer Gebrauchslage, in der er nach oben gerichtet ist, in eine Nichtgebrauchslage verschwenkbar ist, in welcher er nach unten weist, dadurch **gekennzeichnet,** daß der Griff (12) ein horizontales Achsstück (14) aufweist, das mit zwei parallel zur Längsachse (15) des Achsstückes (14) sich erstreckenden Vertiefungen (18) ausgestattet ist und daß am Träger (7) ein mit einem Vorsprung (21) versehenes, unter konstanter Federbelastung stehendes Rastteil (20) angeordnet ist, das von Hand längs des Trägers (7) bewegbar und zum wahlweisen Eingreifen in eine der Vertiefungen (18) des Achsstückes (14) bestimmt ist.

2. Transportroller nach Anspruch 1, dadurch **gekennzeichnet,** daß die Vertiefungen (18) an einem zylindrischen Mittelstück (17) des Achstückes (14) angeordnet sind.

3. Transportroller nach Anspruch 1 oder 2, dadurch **gekennzeichnet,** daß das Rastteil (20) am Träger (7) in einem Raum (11) angeordnet ist, der vom oberen Ende (9) des Trägers (7) aus zugänglich ist.

4. Transportroller nach einem der Ansprüche 1 bis 3, dadurch **gekennzeichnet,** daß das Rastteil (20) mit einem Griffstück (13) verbunden ist, das von außen durch den Träger (7) zum Rastteil (20) geführt ist.

5. Transportroller nach einem der Ansprüche 1 bis 4, dadurch **gekennzeichnet,** daß der Griff (12) in Gebrauchslage und in Nichtgebrauchslage über das Achsstück (14) und über das Rastteil (20) lösbar am Träger (7) arretiert ist.
